# EUROPEAN PATENT APPLICATION

(11) **EP 4 436 276 A1**
(43) Date of publication of application: **25.09.2024**
(21) Application number: 21964379.8
(22) Date of filing: 18.11.2021
(51) Int. Cl.: H04W 64/00, H04W 24/10

(54) **POSITIONING METHOD AND APPARATUS, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2021/131557
(87) International publication number: WO 2023/087222

(57) **Abstract**

A positioning method and apparatus, and a storage medium. The positioning method comprises: reporting a positioning measurement report, the positioning measurement report comprising at least one of a carrier phase measurement result and direct path indication information. By reporting the positioning measurement report comprising the carrier phase measurement result and/or indication information for indicating whether a path is a direct path, the positioning accuracy can be improved.

## Description

### TECHNICAL FIELD

The disclosure relates to the field of communication technology, in particular to a positioning method, a positioning apparatus and a storage medium.

### BACKGROUND

5G R16 introduces a variety of positioning technologies to achieve terminal positioning. For some of the positioning technologies, measurement results for multiple paths are superimposed to obtain a measurement result for the multiple paths that can be used for positioning measurement. However, positioning accuracy may be greatly affected by multipath, superimposing measurement results for multiple paths and adopting a unified measurement result may reduce the positioning accuracy.

### SUMMARY

To overcome problems in the related art, the disclosure provides a positioning method, a positioning apparatus and a storage medium.

According to a first aspect of embodiments of the disclosure, a positioning method, performed by a positioning measurement device, is provided. The method includes:
reporting a positioning measurement report, in which the positioning measurement report includes at least one of a carrier phase measurement result and direct path indication information.

In an implementation, the carrier phase measurement result includes at least one of a carrier phase fractional part and a number of carrier phase whole cycles.

In an implementation, the carrier phase fractional part includes a plurality of carrier phase fractional parts corresponding to different paths among a plurality of paths respectively, or a carrier phase fractional part corresponding to the plurality of paths as a whole.

In an implementation, the number of carrier phase whole cycles includes a plurality of numbers of carrier phase whole cycles corresponding to different paths among a plurality of paths respectively, or a number of carrier phase whole cycles corresponding to the plurality of paths as a whole.

In an implementation, the direct path indication information includes a first bit for indicating whether a specified path is a direct path, or a second bit for indicating a probability that a specified path is a direct path.

In an implementation, each piece of direct path indication information corresponds to at least one of:
a single reference signal, a single transmission reception point, or a single carrier phase measurement result.

In an implementation, the measurement report further includes at least one piece of the following information:
a reference signal received power, an angle of arrival, an angle of departure, time of arrival, a difference value of time of arrival, a round-trip time value, indication information on whether a reception (Rx) time error is identical, indication information on whether a transmission (Tx) time error is identical, and indication information on whether a Tx and Rx time error is identical.

In an implementation, reporting the positioning measurement report includes: reporting the positioning measurement report to a core network device.

In an implementation, the positioning measurement report is obtained by measurement on different paths among a plurality of paths based on a positioning reference signal, and the positioning reference signal includes: a downlink positioning reference signal, or an uplink positioning reference signal.

According to a second aspect of embodiments of the disclosure, a positioning method, performed by a core network device, is provided. The method includes:
receiving a positioning measurement report, in which the positioning measurement report includes at least one of a carrier phase measurement result and direct path indication information.

In an implementation, the carrier phase measurement result includes at least one of a carrier phase fractional part and a number of carrier phase whole cycles.

In an implementation, the carrier phase fractional part includes a plurality of carrier phase fractional parts corresponding to different paths among a plurality of paths respectively, or a carrier phase fractional part corresponding to the plurality of paths as a whole.

In an implementation, the number of carrier phase whole cycles includes a plurality of numbers of carrier phase whole cycles corresponding to different paths among a plurality of paths respectively, or a number of carrier phase whole cycles corresponding to the plurality of paths as a whole.

In an implementation, the direct path indication information includes a first bit for indicating whether a specified path is a direct path, or a second bit for indicating a probability that a specified path is a direct path.

In an implementation, each piece of direct path indication information corresponds to at least one of:
a single reference signal, a single transmission reception point, or a single carrier phase measurement result.

In an implementation, the measurement report further includes at least one piece of the following information:
a reference signal received power, an angle of arrival, an angle of departure, time of arrival, a difference value of time of arrival, a round-trip time value, indication information on whether a reception (Rx) time error is identical, indication information on whether a transmission (Tx) time error is identical, and indication information on whether a Tx and Rx time error is identical.

In an implementation, the positioning measurement report is obtained by measurement on different paths among a plurality of paths based on a positioning reference signal, and the positioning reference signal includes: a downlink positioning reference signal, or an uplink positioning reference signal.

According to a third aspect of embodiments of the disclosure, a positioning apparatus is provided. The apparatus includes:
a sending unit, configured to report a positioning measurement report, in which the positioning measurement report includes at least one of a carrier phase measurement result and direct path indication information.

In an implementation, the carrier phase measurement result includes at least one of a carrier phase fractional part and a number of carrier phase whole cycles.

In an implementation, the carrier phase fractional part includes a plurality of carrier phase fractional parts corresponding to different paths among a plurality of paths respectively, or a carrier phase fractional part corresponding to the plurality of paths as a whole.

In an implementation, the number of carrier phase whole cycles includes a plurality of numbers of carrier phase whole cycles corresponding to different paths among a plurality of paths respectively, or a number of carrier phase whole cycles corresponding to the plurality of paths as a whole.

In an implementation, the direct path indication information includes a first bit for indicating whether a specified path is a direct path, or a second bit for indicating a probability that a specified path is a direct path.

In an implementation, each piece of direct path indication information corresponds to at least one of:
a single reference signal, a single transmission reception point, or a single carrier phase measurement result.

In an implementation, the measurement report further includes at least one piece of the following information:
a reference signal received power, an angle of arrival, an angle of departure, time of arrival, a difference value of time of arrival, a round-trip time value, indication information on whether a reception (Rx) time error is identical, indication information on whether a transmission (Tx) time error is identical, and indication information on whether a Tx and Rx time error is identical.

In an implementation, the sending unit is configured to report the positioning measurement report to a core network device.

In an implementation, the positioning measurement report is obtained by measurement on different paths among a plurality of paths based on a positioning reference signal, and the positioning reference signal includes: a downlink positioning reference signal, or an uplink positioning reference signal.

According to a fourth aspect of embodiments of the disclosure, a positioning apparatus is provided. The apparatus includes:
a receiving unit, configured to receive a positioning measurement report, in which the positioning measurement report includes at least one of a carrier phase measurement result and direct path indication information.

In an implementation, the carrier phase measurement result includes at least one of a carrier phase fractional part and a number of carrier phase whole cycles.

In an implementation, the carrier phase fractional part includes a plurality of carrier phase fractional parts corresponding to different paths among a plurality of paths respectively, or a carrier phase fractional part corresponding to the plurality of paths as a whole.

In an implementation, the number of carrier phase whole cycles includes a plurality of numbers of carrier phase whole cycles corresponding to different paths among a plurality of paths respectively, or a number of carrier phase whole cycles corresponding to the plurality of paths as a whole.

In an implementation, the direct path indication information includes a first bit for indicating whether a specified path is a direct path, or a second bit for indicating a probability that a specified path is a direct path.

In an implementation, each piece of direct path indication information corresponds to at least one of:
a single reference signal, a single transmission reception point, or a single carrier phase measurement result.

In an implementation, the measurement report further includes at least one piece of the following information:
a reference signal received power, an angle of arrival, an angle of departure, time of arrival, a difference value of time of arrival, a round-trip time value, indication information on whether a reception (Rx) time error is identical, indication information on whether a transmission (Tx) time error is identical, and indication information on whether a Tx and Rx time error is identical.

In an implementation, the positioning measurement report is obtained by measurement on different paths among a plurality of paths based on a positioning reference signal, and the positioning reference signal includes: a downlink positioning reference signal, or an uplink positioning reference signal.

According to a fifth aspect of embodiments of the disclosure, a positioning device is provided. The device includes:
a processor and a memory for storing instructions executable by the processor; in which
the processor is configured to: perform the method described in the first aspect or any of the implementations of the first aspect.

According to a sixth aspect of embodiments of the disclosure, a positioning device is provided. The device includes:
a processor and a memory for storing instructions executable by the processor; in which
the processor is configured to: perform the method described in the second aspect or any of the implementations of the second aspect.

According to a seventh aspect of embodiments of the disclosure, a storage medium having instructions stored thereon is provided. When the instructions are executed by a processor, the method described in the first aspect or any of the implementations of the first aspect is implemented.

According to an eighth aspect of embodiments of the disclosure, a storage medium having instructions stored thereon is provided. When the instructions are executed by a processor, the method described in the second aspect or any of the implementations of the second aspect is implemented.

The technical solutions provided by embodiments of the disclosure may include the following beneficial effects. The positioning measurement report reported in the embodiments of the disclosure includes at least one of the carrier phase measurement result and the direct path indication information. The positioning accuracy can be improved by indicating the carrier phase measurement result and/or the indication indicates whether a path is a direct path.

It is understood that the foregoing general description and the following detailed description are exemplary and explanatory only and do not limit the disclosure.

### BRIEF DESCRIPTION OF THE DRAWINGS

The accompanying drawings, which are incorporated in and constitute a part of this specification, illustrate embodiments consistent with the disclosure and together with the description serve to explain the principles of the disclosure.
FIG. 1 is a schematic diagram of a wireless communication system according to an exemplary embodiment.
FIG. 2 is a flowchart of a positioning method according to an exemplary embodiment.
FIG. 3 is a flowchart of a positioning method according to an exemplary embodiment.
FIG. 4 is a block diagram of a positioning apparatus according to an exemplary embodiment.
FIG. 5 is a block diagram of a positioning apparatus according to an exemplary embodiment.
FIG. 6 is a block diagram of a positioning device according to an exemplary embodiment.
FIG. 7 is a block diagram of a positioning device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all possible implementations consistent with the disclosure.

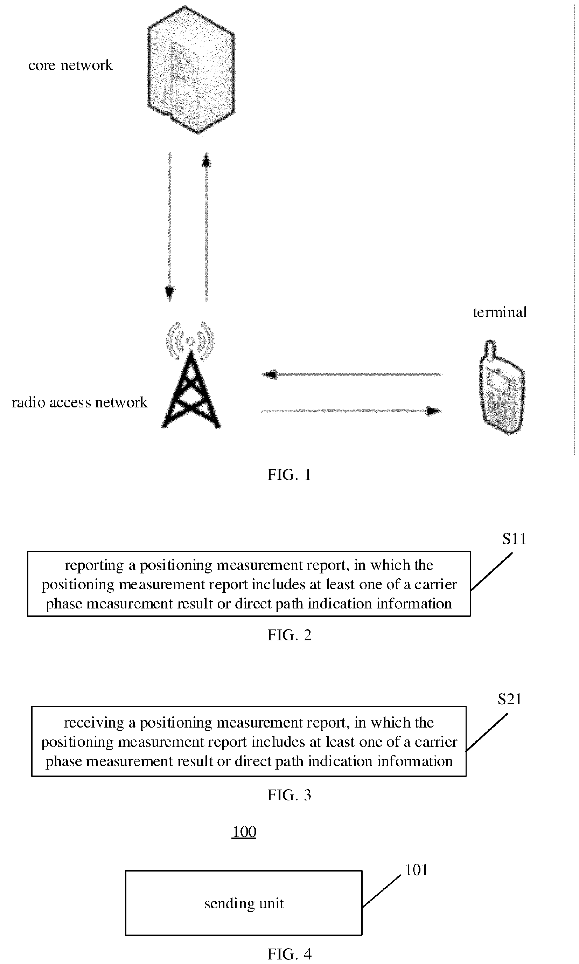

The disclosure provides a positioning method, which can be applied to a wireless communication system shown in FIG. 1. As shown in FIG. 1, a terminal accesses to a radio access network (RAN) through a RAN network device such as a base station. The RAN network device and a core network device implement backhaul and forward transmission of data for performing various communication services.

It is understood that the wireless communication system is a network that provides wireless communication functions. The wireless communication system can adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), and carrier sense multiple access with collision avoidance. According to factors such as capacity, rate and latency of networks, the networks can be divided into a second Generation (2G) network, a 3G network, a 4G network, or a future evolved network, such as a 5G network, which can also be called a new radio (NR) network. For easy of description, in this disclosure, the wireless communication network is sometimes simply referred to as a network or a system. In the disclosure, the network may include a RAN and a core network (CN). The network includes a network device, such as a wireless network device, a CN device, etc. The wireless network device can also be called a base station. The network can provide network services to the terminal through a network device. Different operators can provide different network services to the terminal, that is, different operators correspond to different operator networks. For example, in 5G NR, a wireless network device, i.e., a RAN device, may be referred to as a gNB. The gNB may be embodied as at least one transmission reception point (TRP). The CN device includes a location management function network element. Optionally, the location management function network element includes a location server, which may be realized as any of the following: a location management function (LMF) network element, an enhanced serving mobile location center (E-SMLC), a secure user plane location (SUPL), and a SUPL location platform (SLP).

The terminal is a device that provides voice and/or data connectivity to a user, sometimes referred to as a mobile station (MS), a user equipment (UE), a mobile terminal (MT), and so on. For example, the terminal may be a handheld device with a wireless connectivity function, an in-vehicle device, and the like. For example, the terminal may include a mobile phone, a pocket personal computer (PPC), a handheld computer, a personal digital assistant (PDA), a laptop, a tablet computer, a wearable device, or a vehicle-mounted device, etc. In the embodiments of the disclosure, the terminal is referred to as a UE as an example for description.

5G R16 introduces a variety of positioning technologies. By measuring a reference signal through a positioning measurement device and reporting a positioning measurement result, device positioning can be realized. In some of the positioning technologies, the positioning measurement device may be a terminal. The terminal reports a positioning measurement report to a CN device, and the CN device performs positioning based on the positioning measurement report. In other positioning technologies, the positioning measurement device may be a TRP. The TRP reports a positioning measurement report to a CN device, and the CN device performs positioning based on the positioning measurement report. When performing the positioning through interaction among the terminal, the TRP and the core network device, the reference signal is usually transmitted based on multipath transmission. The positioning measurement result in the positioning measurement report reported by the terminal or TRP is usually a unified measurement result corresponding to multiple paths. Therefore, this positioning method may affect positioning accuracy.

In Rel-18 project discussion, a carrier phase-based positioning method is proposed to improve the positioning accuracy. The contents that are measured and reported in the carrier phase-based positioning method include a carrier phase fractional part and a number of carrier phase whole cycles. The carrier phase fractional part is a fractional part that is less than one whole cycle, which is a value measured at a moment t. It can also be understood as a portion of a difference between a phase of a reference signal generated at a receiver and a phase of a carrier signal from a sender that is less than one cycle. The number of whole cycles is a number of full cycles of a carrier signal accumulated by a counter one by one from a moment to when the receiver locks onto a satellite signal to a measurement moment t.

In view of this, embodiments of the disclosure provide a positioning method, in which a carrier phase positioning measurement and reporting method based on at least one path is proposed. In the method, whether at least one path for carrier phase measurement and reporting is a direct path can be indicated to improve positioning accuracy.

The direct path can be understood as a path that is not reflected, refracted or bypassed by any obstacle during signal transmission. Positioning accuracy can be improved by indicating the direct path.

For the convenience of description in embodiments of the disclosure, indication information for indicating information related to a direct path is referred to as direct path indication information.

FIG. 2 is a flowchart of a positioning method according to an exemplary embodiment. As illustrated in FIG. 2, the positioning method is performed by a positioning measurement device, which is a terminal or a TRP. The method includes the following steps.

At step S11, a positioning measurement report is reported, in which the positioning measurement report includes at least one of a carrier phase measurement result and direct path indication information.

In embodiments of the disclosure, the terminal or the TRP may perform positioning measurement based on multiple paths. The carrier phase measurement result may be carrier phase measurement results determined when positioning measurement is performed for different paths among the multiple paths respectively, or a carrier phase measurement result determined when positioning measurement is performed for different paths among the multiple paths as a whole.

The positioning measurement report may be based on measurement of a reference signal (RS) for positioning purpose on different paths among the multiple paths. The RS for positioning purpose may be, for example, a positioning reference signal (PRS) for downlink positioning purpose, or a reference signal for uplink positioning purpose such as a sounding reference signal (SRS), or other newly introduced reference signal for positioning purpose.

The direct path indication information may be relevant information for indicating whether at least one path for positioning measurement is a direct path.

A measurement result of the direct path can truly reflect a distance and direction between the TRP and the terminal. Thus, in embodiments of the disclosure, the reported positioning measurement report includes the carrier phase measurement result and/or the direct path indication information, which can improve the positioning accuracy.

In an implementation, the carrier phase measurement result includes at least one of a carrier phase fractional part and a number of carrier phase whole cycles. For example, the carrier phase measurement result may include the number of carrier phase whole cycles, or the carrier phase fractional part, or both the number of carrier phase whole cycles and the carrier phase fractional part.

It is understood that the carrier phase fractional part and the number of carrier phase whole cycles in the embodiments of the disclosure may be numbers of wavelengths obtained by measuring a positioning signal based on at least one path.

In embodiments of the disclosure, the terminal or TRP may perform positioning measurement based on multiple paths. The carrier phase fractional part included in the positioning measurement result includes carrier phase fractional parts corresponding to different paths among the multiple paths respectively, or a carrier phase fractional part corresponding to the multiple paths as a whole.

In embodiments of the disclosure, the terminal or TRP may perform positioning measurement based on multiple paths. The number of carrier phase whole cycles included in the positioning measurement result includes numbers of carrier phase whole cycles corresponding to different paths among the multiple paths respectively, or a number of carrier phase whole cycles corresponding to the multiple paths as a whole.

In embodiments of the disclosure, the positioning measurement result includes the direct path indication information. The direct path indication information is used to indicate relevant information about whether a specified path is a direct path. On the one hand, the direct path indication information may include a bit (hereinafter referred to as a first bit) used to indicate whether a specified path is a direct path. In an example, for a certain path, one bit value may be set to indicate whether the path is a direct path. For example, a bit being set to 1 indicates that the corresponding path is a direct path, and a bit being set to 0 indicates that the corresponding path is not a direct path. On the other hand, the direct path indication information may include a bit (hereinafter referred to as a second bit) used to indicate a probability that a specified path is a direct path. The probability may be, for example, 0, 0.1, 0.2, ... , 0.9, 1, etc. In an example, for a certain path, multiple bits may be set to indicate the probabilities that the path is a direct path. For example, correspondingly, a number of bits can be set according to the numbers of probability values, and different bit values correspond to different probability values, and thus the probability that a certain path is a direct path can be indicated by the bit value.

In an implementation, the direct path indication information involved in embodiments of the disclosure may correspond to at least one of a single reference signal (RS), a single TRP, or a single carrier phase measurement result.

The RS corresponding to the direct path indication information involved in embodiments of the disclosure can be a RS for positioning purpose. The RS for positioning purpose may be, for example, a PRS, or a RS for uplink positioning such as an SRS, or other newly introduced RSs for positioning purpose.

The single carrier phase measurement result includes a single carrier phase measurement result for one RS on multiple paths, or a single carrier phase measurement result for one RS on a first path, or a single carrier phase measurement result for one RS on a path other than the first path.

When the direct path indication information corresponds to a single RS, the direct path indication information can be understood as whether a direct path exists in at least one path passed through by the RS, or can be understood as a probability of existence of a direct path in the at least one path passed through by the RS. When the direct path indication information corresponds to a single TRP, the direct path indication information can be understood as whether a direct path exists in at least one path passed through by at least one RS corresponding to the TRP, or can be understood as a probability of existence of a direct path in the at least one path passed through by the at least one RS corresponding to the TRP. The RS corresponding to the TRP includes a RS sent by the TRP or a RS sent by the terminal to the TRP. When the direct path indication information corresponds to a single carrier phase measurement result, and the carrier phase measurement result is a single measurement result of one RS on multiple paths, the direct path indication information can be understood as whether there is a direct path in at least one path passed through by the RS, or can be understood as a probability of existence of a direct path in the at least one path passed through by the RS. When the direct path indication information corresponds to a single carrier phase measurement result, and the carrier phase measurement result is a measurement result of one RS on the first path or a path other than the first path, the direct path indication information can be understood as whether the first path or the path other than the first path passed through by the RS is a direct path, or can be understood as a probability that the first path or the path other than the first path passed through by the RS is a direct path.

It can be understood that the positioning measurement report involved in the above-mentioned embodiments of the disclosure also includes at least one piece of the following information:
a reference signal received power, an angle of arrival, an angle of departure, time of arrival, a difference value of time of arrival, a round-trip time value, an indication information on whether a reception (Rx) time error (REG) is identical, an indication information on whether a transmission (Tx) time error (TEG) is identical, and an indication information on whether a Tx and Rx time error (TREG) is identical.

The indication information on whether the REG is identical may be used to indicate which RSs use the same REG. The indication information on whether the TEG is identical may be used to indicate which RSs use the same TEG. The indication information on whether the TREG is identical may be used to indicate which RSs use the same TEG.

Furthermore, the positioning measurement report involved in the above-mentioned embodiments of the disclosure may be reported by the terminal to a core network device such as a location management function (LMF) network element. Or, the positioning measurement report may be reported by the TRP to the LMF and other CN devices.

In embodiments of the disclosure, path-based positioning measurement and reporting of the carrier phase is proposed, and whether a path is a direct path is indicated, thus improving the positioning accuracy.

Based on the same concept, embodiments of the disclosure also provide a positioning method performed by a CN device.

FIG. 3 is a flowchart of a positioning method according to an exemplary embodiment. As illustrated in FIG. 3, the method is performed by a CN device. The method includes the following steps.

At step S21, a positioning measurement report is received, in which the positioning measurement report includes at least one of a carrier phase measurement result and direct path indication information.

In embodiments of the disclosure, the carrier phase measurement result may be carrier phase measurement results determined when positioning measurement is performed on different paths among multiple paths respectively, or a carrier phase measurement result determined when positioning measurement is performed on different paths among the multiple paths as a whole.

The positioning measurement report may be based on measurement of a RS for positioning purpose on different paths among multiple paths. The RS for positioning purpose may be, for example, a PRS, a RS for uplink positioning such as an SRS, or other newly introduced RSs for positioning purpose.

The direct path indication information may be relevant information for indicating whether at least one path for positioning measurement is a direct path.

A measurement result of the direct path measurement result can truly reflect a distance and direction between the TRP and the terminal. Thus, in embodiments of the disclosure, the positioning measurement report includes the carrier phase measurement result and/or the direct path indication information, which can improve the positioning accuracy.

In an implementation, the carrier phase measurement result includes at least one of a carrier phase fractional part and a number of carrier phase whole cycles. For example, the carrier phase measurement result may include the number of carrier phase whole cycles, or the carrier phase fractional part, or both the number of carrier phase whole cycles and the carrier phase fractional part.

It is understood that the carrier phase fractional part and the number of carrier phase whole cycles in embodiments of the disclosure may be numbers of wavelengths obtained by measuring a positioning signal based on at least one path.

In embodiments of the disclosure, the carrier phase fractional part included in the positioning measurement result includes a plurality of carrier phase fractional parts corresponding to different paths among multiple paths respectively, or a carrier phase fractional part corresponding to the multiple paths as a whole.

In embodiments of the disclosure, the number of carrier phase whole cycles included in the positioning measurement result includes a plurality of numbers of carrier phase whole cycles corresponding to different paths among the multiple paths, or a number of carrier phase whole cycles corresponding to the multiple paths as a whole.

In an implementation, on the one hand, the direct path indication information may include a first bit used to indicate whether a specified path is a direct path. In an example, for a certain path, one bit value may be set to indicate whether the path is a direct path. For example, a bit being set to 1 indicates that the corresponding path is a direct path, and a bit being set to 0, it indicates that the corresponding path is not a direct path. On the other hand, the direct path indication information may include a second bit used to indicate a probability that a specified path is a direct path. The probability may be, for example, 0, 0.1, 0.2, ... , 0.9, 1, etc. In an example, for a certain path, multiple bits may be set to indicate the probabilities that the path is a direct path. For example, correspondingly, a number of bits can be set according to the numbers of probability values, and different bit values correspond to different probability values, and thus the probability that a certain path is a direct path can be indicated by the bit value.

Each piece of direct path indication information corresponds to at least one of: a single reference signal, a single TRP, or a single carrier phase measurement result.

The RS corresponding to the direct path indication information involved in embodiments of the disclosure can be a RS for positioning purpose. The RS for positioning purpose may be, for example, a PRS for downlink positioning, a RS for uplink positioning such as an SRS, or other newly introduced RSs for positioning purpose.

The single carrier phase measurement result includes a single carrier phase measurement result for one RS on multiple paths, a single carrier phase measurement result for one RS on a first path, or a carrier phase measurement result for one RS on a path other than the first path.

When the direct path indication information corresponds to a single RS, the direct path indication information can be understood as whether a direct path exists in at least one path passed through by the RS, or can be understood as a probability of existence of a direct path in the at least one path passed through by the RS. When the direct path indication information corresponds to a single TRP, the direct path indication information can be understood as whether a direct path exists in at least one path passed through by at least one RS corresponding to the TRP, or can be understood as a probability of existence of a direct path in the at least one path passed through by the at least one RS corresponding to the TRP. The RS corresponding to the TRP includes a RS sent by the TRP or a RS sent by the terminal to the TRP. When the direct path indication information corresponds to a single carrier phase measurement result, and the carrier phase measurement result is a single measurement result of one RS on multiple paths, the direct path indication information can be understood as whether there is a direct path in at least one path passed through by the RS, or can be understood as the probability of existence of a direct path in the at least one path passed through by the RS. When the direct path indication information corresponds to a single carrier phase measurement result, and the carrier phase measurement result is a measurement result of one RS on the first path or a path other than the first path, the direct path indication information can be understood as whether the first path or the path other than the first path passed through by the RS is a direct path, or can be understood as a the probability that the first path or the path other than the first path passed through by the RS is a direct path.

It can be understood that the positioning measurement report involved in the above-mentioned embodiments of the disclosure also includes at least one piece of the following information:
a reference signal received power, an angle of arrival, an angle of departure, time of arrival, a difference value of time of arrival, a round-trip time value, an indication information on whether a REG is identical, an indication information on whether a TEG is identical, and an indication information on whether a TREG is identical.

The indication information on whether the REG is identical may be used to indicate which RSs use the same REG. The indication information on whether the TEG is identical may be used to indicate which RSs use the same TEG. The indication information on whether the TREG is identical may be used to indicate which RSs use the same TEG.

In embodiments of the disclosure, the positioning measurement report obtained by the CN device includes at least one of the carrier phase measurement result and the direct path indication information, which can improve the positioning accuracy.

It is understood that the positioning method performed by the CN device provided by embodiments of the disclosure is similar to the positioning method performed by the terminal or the TRP, and the similarities will not be repeated herein.

It is further understood that the positioning method provided in the embodiments of the disclosure may be applied to a positioning implementation process realized through interaction among a terminal, a TRP, and a CN device. For the positioning method realized through the interaction among the terminal, the TRP, and the CN device, the terminal, the TRP, and the CN device each has functions related to the realization of the above embodiments, and will not be repeated herein.

It should be noted that those skilled in the art can understand that various implementations /embodiments involved in the embodiments of the disclosure can be used in combination with the aforementioned embodiments or can be used independently. Whether used alone or in combination with the aforementioned embodiments, the implementation principles are similar. In the implementations of the disclosure, some embodiments are described as implementations used together. Certainly, those skilled in the art may understand that such examples are not intended to limit the embodiments of the disclosure.

Based on the same concept, embodiments of the disclosure also provide a positioning apparatus.

It can be understood that, in order to realize the above functions, the positioning apparatus provided in embodiments of the disclosure includes corresponding hardware structures and/or software modules executing various functions. In combination with the units and algorithm steps of each example disclosed in the embodiments of the disclosure, the embodiments of the disclosure can be implemented in the form of hardware or a combination of hardware and computer software. Whether a function is performed by hardware or by computer software driving hardware depends on the specific application and the design constraints of the technical solution. Those skilled in the art may use different methods to implement the described functions for each specific application, but such implementation should not be considered as beyond the scope of the technical solutions of the embodiments of the disclosure.

FIG. 4 is a block diagram of a positioning apparatus according to an exemplary embodiment. As illustrated in FIG. 4, the positioning apparatus 100 may be applied to a terminal or TRP. The apparatus includes a sending unit 101.

The sending unit 101 is configured to report a positioning measurement report, in which the positioning measurement report includes at least one of a carrier phase measurement result and direct path indication information.

In an implementation, the carrier phase measurement result includes at least one of a carrier phase fractional part and a number of carrier phase whole cycles.

In an implementation, the carrier phase fractional part includes a plurality of carrier phase fractional parts corresponding to different paths among a plurality of paths respectively, or a carrier phase fractional part corresponding to the plurality of paths as a whole.

In an implementation, the number of carrier phase whole cycles includes a plurality of numbers of carrier phase whole cycles corresponding to different paths among a plurality of paths respectively, or a number of carrier phase whole cycles corresponding to the plurality of paths as a whole.

In an implementation, the direct path indication information includes a first bit for indicating whether a specified path is a direct path, or a second bit for indicating a probability that a specified path is a direct path.

In an implementation, each piece of direct path indication information corresponds to at least one of:
a single RS, a single TRP, or a single carrier phase measurement result.

In an implementation, the measurement report further includes at least one piece of the following information:
a RS received power, an angle of arrival, an angle of departure, time of arrival, a difference value of time of arrival, a round-trip time value, indication information on whether a REG is identical, indication information on whether a TEG is identical, and indication information on whether a TREG is identical.

In an implementation, the sending unit 101 is configured to report the positioning measurement report to a CN device.

In an implementation, the positioning measurement report is obtained by measurement on different paths among multiple paths based on a PRS, and the PRS includes: a downlink positioning reference signal, or an uplink positioning reference signal.

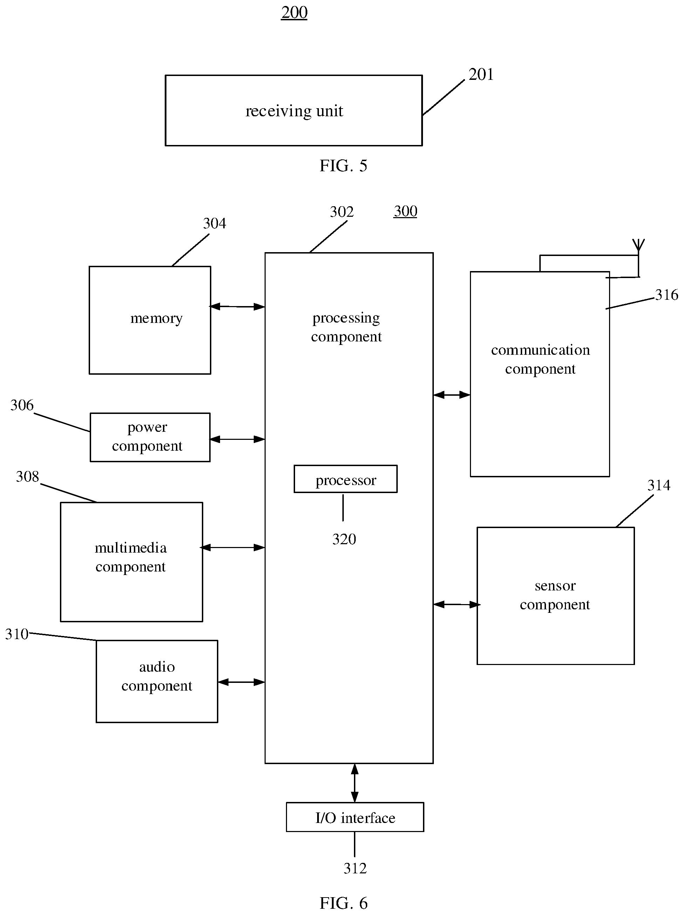

FIG. 5 is a block diagram of a positioning apparatus according to an exemplary embodiment. As illustrated in FIG. 5, the positioning apparatus 200 may be applied to a CN device. The apparatus includes a receiving unit 201.

The receiving unit 201 is configured to receive a positioning measurement report, in which the positioning measurement report includes at least one of a carrier phase measurement result and direct path indication information.

In an implementation, the carrier phase measurement result includes at least one of a carrier phase fractional part and a number of carrier phase whole cycles.

In an implementation, the carrier phase fractional part includes a plurality of carrier phase fractional parts corresponding to different paths among multiple paths respectively, or a carrier phase fractional part corresponding to the multiple paths as a whole.

In an implementation, the number of carrier phase whole cycles includes a plurality of numbers of carrier phase whole cycles corresponding to different paths among multiple paths respectively, or a number of carrier phase whole cycles corresponding to the multiple paths as a whole.

In an implementation, the direct path indication information includes a first bit for indicating whether a specified path is a direct path, or a second bit for indicating a probability that a specified path is a direct path.

In an implementation, each piece of direct path indication information corresponds to at least one of:
a single RS, a single TRP, or single a carrier phase measurement result.

In an implementation, the measurement report further includes at least one piece of the following information:
a RS received power, an angle of arrival, an angle of departure, time of arrival, a difference value of time of arrival, a round-trip time value, indication information on whether a REG is identical, indication information on whether a TEG is identical, and indication information on whether a TREG is identical.

In an implementation, the positioning measurement report is obtained by measurement on different paths among multiple paths based on a PRS, and the PRS includes: a downlink positioning reference signal, or an uplink positioning reference signal.

With respect to the apparatus 200 in the above embodiments, the specific manner in which each module performs an operation has been described in detail in the embodiments relating to the method, and will not be described in detail herein.

FIG. 6 is a block diagram of a positioning device 300 according to an exemplary embodiment. The device 300 may be provided as a terminal or a TRP. For example, the device 300 may be a mobile phone, a computer, a digital broadcasting terminal, a message transceiver device, a game console, a tablet device, a medical device, a fitness device, and a PDA.

As illustrated in FIG. 6, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, telephone calls, data communications, camera operations, and recording operations. The processing component 302 may include one or more processors 320 to perform all or part of the steps in the above described methods. Moreover, the processing component 302 may include one or more modules which facilitate interaction between the processing component 302 and other components. For example, the processing component 302 may include a multimedia module to facilitate interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, videos, etc. The memory 304 may be implemented using any type of volatile or non-volatile storage devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time and a pressure associated with the touch or swipe action. In some embodiments, the multimedia component 308 includes a front-facing camera and/or a rear-facing camera. When the device 300 is in an operating mode, such as a shooting mode or a video mode, the front-facing camera and/or the rear-facing camera can receive external multimedia data. Each of the front-facing camera and the rear-facing camera may be a fixed optical lens system or has focal length and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as a keyboard, a click wheel, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of a user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may also include a light sensor, such as a Complementary Metal Oxide Semiconductor (CMOS) or Charge-Coupled Device (CCD) image sensor, for using in imaging applications. In some embodiments, the sensor component 314 may also include an accelerometer sensor, a gyroscope sensor, a magnetic sensor, a pressure sensor, or a temperature sensor.

The communication component 316 is configured to facilitate communication, wired or wirelessly, between the device 300 and other devices. The device 300 can access a wireless network based on a communication standard, such as Wi-Fi, 2G or 3G, or a combination thereof. In an embodiment, the communication component 316 receives a broadcast signal from an external broadcast management system or broadcast associated information via a broadcast channel. In an embodiment, the communication component 316 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the embodiments, the device 300 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In the embodiments, there is also provided a non-transitory computer readable storage medium including instructions, such as the memory 304, executable by the processor 320 in the device 300, for performing the above methods. For example, the non-transitory computer-readable storage medium may be a ROM, a Random Access Memory (RAM), a CD-ROM, a magnetic tape, a floppy disc, and an optical data storage device.

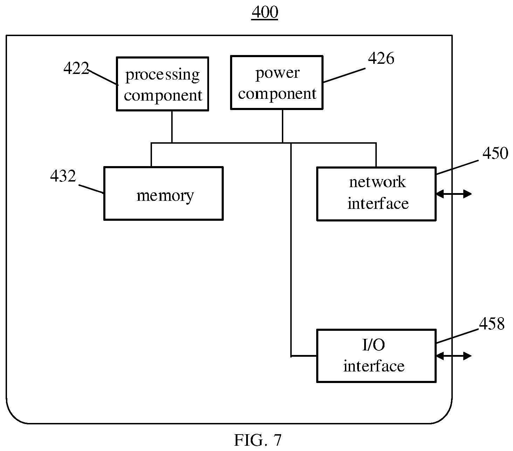

FIG. 7 is a block diagram of a positioning device 400 illustrated according to an exemplary embodiment. For example, the device 400 may be provided as a core network device. As illustrated in FIG. 7, the device 400 includes a processing component 422 consisting of one or more processors, and memory resources represented by a memory 432 for storing instructions that may be executed by the processing component 422, such as applications. The applications stored in the memory 432 may include one or more modules each corresponding to a set of instructions. In addition, the processing component 422 is configured to execute the instructions to perform the above methods.

The device 400 may also include a power component 426 configured to perform power management of the device 400, a wired or wireless network interface 450 configured to connect the device 400 to a network, and an I/O interface 458. The device 400 may operate based on an operating system stored in the memory 432, such as Windows Server^{™}, Mac OS X^{™}, Unix^{™}, Linux^{™}, FreeBSD^{™}, or the like.

In the embodiments, the device 300 may be implemented by one or more ASICs, DSPs, DSPDs, PLDs, FPGAs, controllers, micro-controllers, microprocessors or other electronic components, for performing the above described methods.

In the embodiments, there is also provided a non-transitory computer readable storage medium including instructions, such as the memory 432, executable by the processor 422 in the device 400, for performing the above methods. For example, the non-transitory computer-readable storage medium may be a ROM, a RAM, a CD-ROM, a magnetic tape, a floppy disc, and an optical data storage device.

It is understood that the term "multiple" in the disclosure refers to two or more, which is the similar for other quantifiers. The term "and/or" describes a relation of associated objects, which indicates three relations, for example, "A and/or B" indicates that A exists alone, A and B both exist, and B exists alone. The character "/" generally indicates that the associated objects prior to and after the character "/" is an "or" relation. The terms "a", "said" and "the" in the singular form are also intended to include the plural form, unless the context clearly indicates otherwise.

It is further understood that the terms "first", "second", etc. are used to describe various types of information, but that such information should not be limited to these terms. These terms are used only to distinguish information of the same type from each other and do not indicate a particular order or degree of importance. In fact, the expressions "first" and "second" can be used interchangeably. For example, without departing from the scope of this disclosure, first information may also be referred to as second information, and similarly, second information may also be referred to as first information.

It is further understood that although the operations are depicted in the accompanying drawings in a particular order in the embodiments of the disclosure, it should not be construed as requiring that the operations are performed in the particular sequence shown or in a serial sequence, or that all of the operations shown be performed to obtain the desired results. Multitasking and parallel processing may be advantageous in particular environments.

Other embodiments of the disclosure will be apparent to those skilled in the art from consideration of the specification and practice of the disclosure disclosed here. This disclosure is intended to cover any variations, uses, or adaptations of the disclosure following the general principles thereof and including such departures from the disclosure as come within known or customary practice in the art.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A positioning method, performed by a positioning measurement device, comprising:
reporting a positioning measurement report, wherein the positioning measurement report comprises at least one of a carrier phase measurement result or direct path indication information.

2. The method of claim 1, wherein the carrier phase measurement result comprises at least one of a carrier phase fractional part or a number of carrier phase whole cycles.

3. The method of claim 2, wherein the carrier phase fractional part comprises a plurality of carrier phase fractional parts corresponding to different paths among a plurality of paths respectively, or a carrier phase fractional part corresponding to the plurality of paths as a whole.

4. The method of claim 2, wherein the number of carrier phase whole cycles comprises a plurality of numbers of carrier phase whole cycles corresponding to different paths among a plurality of paths respectively, or a number of carrier phase whole cycles o corresponding to the plurality of as a whole.

5. The method of claim 1, wherein the direct path indication information comprises a first bit for indicating whether a specified path is a direct path, or a second bit for indicating a probability that a specified path is a direct path.

6. The method of claim 5, wherein each piece of direct path indication information corresponds to at least one of:
a single reference signal, a single transmission reception point, or a single carrier phase measurement result.

7. The method of claim 1, wherein the measurement report further comprises at least one piece of the following information:
a reference signal received power, an angle of arrival, an angle of departure, time of arrival, a difference value of time of arrival, a round-trip time value, indication information on whether a reception (Rx) time error is identical, indication information on whether a transmission (Tx) time error is identical, or indication information on whether a Tx and Rx time error is identical.

8. The method of claim 1, wherein reporting the positioning measurement report comprises:
reporting the positioning measurement report to a core network device.

9. The method of claim 1, wherein the positioning measurement report is obtained by measurement on different paths among a plurality of paths based on a positioning reference signal, and the positioning reference signal comprises:
a downlink positioning reference signal, or an uplink positioning reference signal.

10. A positioning method, performed by a core network device, comprising:
receiving a positioning measurement report, wherein the positioning measurement report comprises at least one of a carrier phase measurement result or direct path indication information.

11. The method of claim 10, wherein the carrier phase measurement result comprises at least one of a carrier phase fractional part or a number of carrier phase whole cycles.

12. The method of claim 11, wherein the carrier phase fractional part comprises a plurality of carrier phase fractional parts corresponding to different paths among a plurality of paths respectively, or a carrier phase fractional part corresponding to the plurality of paths as a whole.

13. The method of claim 11, wherein the number of carrier phase whole cycles comprises a plurality of numbers of carrier phase whole cycles corresponding to different paths among a plurality of paths respectively, or a number of carrier phase whole cycles corresponding to the plurality of paths as a whole.

14. The method of claim 10, wherein the direct path indication information comprises a first bit for indicating whether a specified path is a direct path, or a second bit for indicating a probability that a specified path is a direct path.

15. The method of claim 14, wherein each piece of direct path indication information corresponds to at least one of:
a single reference signal, a single transmission reception point, or a single carrier phase measurement result.

16. The method of claim 10, wherein the measurement report further comprises at least one piece of the following information:
a reference signal received power, an angle of arrival, an angle of departure, time of arrival, a difference value of time of arrival, a round-trip time value, indication information on whether a reception (Rx) time error is identical, indication information on whether a transmission (Tx) time error is identical, or indication information on whether a Tx and Rx time error is identical.

17. The method of claim 10, wherein the positioning measurement report is obtained by measurement on different paths among a plurality of paths based on a positioning reference signal, and the positioning reference signal comprises:
a downlink positioning reference signal, or an uplink positioning reference signal.

18. A positioning apparatus, comprising:
a sending unit, configured to report a positioning measurement report, wherein the positioning measurement report comprises at least one of a carrier phase measurement result or direct path indication information.

19. A positioning apparatus, comprising:
a receiving unit, configured to receive a positioning measurement report, wherein the positioning measurement report comprises at least one of a carrier phase measurement result or direct path indication information.

20. A positioning device, comprising:
a processor; and
a memory for storing instructions executable by the processor; wherein
the processor is configured to: perform the method of any one of claims 1-9.

21. A positioning device, comprising:
a processor; and
a memory for storing instructions executable by the processor; wherein
the processor is configured to: perform the method of any one of claims 10-17.

22. A storage medium having instructions stored thereon, wherein when the instructions are executed by a processor, the method of any one of claims 1-9 is implemented.

23. A storage medium having instructions stored thereon, wherein when the instructions are executed by a processor, the method of any one of claims 10-17 is implemented.
